Europäisches Patentamt

European Patent Office

Office européen des brevets

(11) Publication number: **0 386 377**
**A1**

# EUROPEAN PATENT APPLICATION

(21) Application number: **89313664.8**

(22) Date of filing: **28.12.89**

(51) Int. Cl.⁵: **B60G 11/20, F16F 1/16**

(30) Priority: **10.03.89 GB 8905535**

(43) Date of publication of application:
**12.09.90 Bulletin 90/37**

(84) Designated Contracting States:
**DE FR GB IT SE**

(71) Applicant: **JAGUAR CARS LIMITED**
**Browns Lane**
**Allesley Coventry CV5 9DR West**
**Midlands(GB)**

(72) Inventor: **Randle, Steven James**
**27 Oak Close**
**Baginton Coventry CV8 3LE(GB)**

(74) Representative: **Cundy, Anthony Brian et al**
**Anthony Cundy & Company 384 Station**
**Road Dorridge**
**Solihull West Midlands B93 8ES(GB)**

(54) **Torsion bar assembly for vehicle suspension.**

(57) A torsion bar assembly for a vehicle suspension comprises a torsion element (2), for example of hollow circular section, formed with an aperture (5) defined by edges (3,4) extending along the length of the torsion element, and a support member (1) including a flexible portion (6) by way of which the support member is secured to one end of the torsion element. The flexible portion is provided with an elongate slot (7) coincident with the aperture (5) of the torsion element.

## TORSION BAR ASSEMBLY FOR VEHICLE SUSPENSION

The present invention relates to a torsion bar assembly for a vehicle suspension

Torsion bars are conventionally used in vehicle suspension systems to restrain vehicle body roll. However, one of the problems encountered with such torsion bars is that in order to maintain the stress within the bar at an acceptable level it is often necessary to employ relatively large diameter bar. On the other hand, the larger the diameter of the bar the greater the stiffness of the bar and thus the lower the flexibility of the bar. It is often difficult to balance the stress within the bar with the stiffness of the bar to meet the practical requirements of the vehicle suspension system. This is particularly so where the vehicle is narrow or the space available for the torsion bar is limited.

It is an object of the present invention to provide a torsion bar assembly for a vehicle suspension which is adaptable to a wide range of stiffness and strength requirements.

According to the present invention there is provided a torsion bar assembly for a vehicle suspension, which assembly comprises:
a torsion element having a hollow section and being formed with an aperture defined by edges extending along the length of the torsion element; and
a support member including a flexible portion by way of which the support member is secured to one end of the torsion element, the flexible portion being provided with an elongate slot co-incident with the aperture of the torsion element.

Preferably the torsion element has a hollow circular section.

The aperture is preferably dimensioned such that the aperture does not fully close under large angular deflections of the torsion element.

Apertures may be formed at each end of the elongate slot in order to reduce stress concentrations.

The torsion bar assembly may include a support member secured to each end of the torsion element.

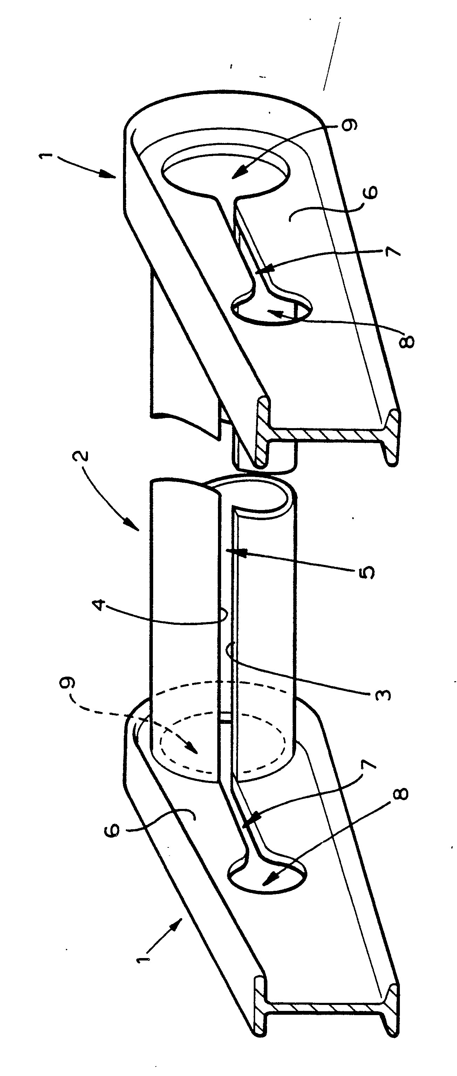

For a better understanding of the present invention and to show more clearly how it may be carried into effect reference will now be made to the accompanying figure which illustrates diagrammatically one embodiment of a torsion bar assembly according to the present invention.

The figure shows a torsion bar assembly which comprises a support member in the form of a radius arm 1 and a hollow cylindrical tube 2. A further radius arm 1 is positioned at the other end of the tube 2. The tube 2 is split along its length so that axially extending edges 3,4 define an aperture 5. The width of the aperture 5 is such that it does not fully close under large angular deflections of the torsion bar.

For such an open section torsion bar to be fully effective the edges 3,4 must be allowed to move relative to each other in the axial direction of the tube 2. This is accomplished by securing the tube 2 to a flexible web 6 of radius arm 1. To increase the scope for axial movement of the edges of the tube 2, the web 6 is formed with a slot 7 which is coincident with the aperture 5. The ends of the slot 7 are formed as generally circular apertures 8,9 having a diameter greater than the width of the slot 7 in order to reduce stress concentrations at the end of the slot 7 and to minimise the risk of crack formation. Aperture 9 is dimensioned such that it has a shape corresponding to the internal dimensions of the tube 2 so as to allow the tube to be welded to the web 6 on both the inside and the outside of the tube.

Such an arrangement offers only a relatively small resistance to axial movement of the edges 3,4 while providing a relatively uniform distribution of shear forces over the end face of the tube.

We have found that the torsion bar assembly according to the present invention provides an increased torsional flexibility, or a greater load capacity compared with a solid cylindrical bar of equivalent stiffness. The decreased stiffness results in a lower single wheel rate while the ultimate strength of the assembly is still sufficient to produce full roll correction.

It should be noted that although the invention has been described above in relation to a cylindrical tube, the tube can have other configurations. However, circular sections do make the most efficient use of space and material.

While the torsion bar according to the present invention can be used in conventional vehicle suspension systems, it can also be used with advantage in vehicle suspension systems which employ active components which may impose additional demands on the torsion bar.

## Claims

1. A torsion bar assembly for a vehicle suspension, characterised in that the assembly comprises a torsion element (2) having a hollow section and being formed with an aperture (5) defined by edges (3,4) extending along the length of the torsion element, and a support member (1) including a flexible portion (6) by way of which the support member is secured to one end of the torsion element, the flexible portion being provided with an elongate slot (7) coincident with the aperture (5) of the torsion element.

2. A torsion bar assembly as claimed in claim 1, characterised in that the torsion element (2) has a hollow circular section.

3. A torsion bar assembly as claimed in claim 1 or 2, characterised in that the aperture (5) is dimensioned such that the aperture does not fully close under large angular deflections of the torsion element.

4. A torsion bar assembly as cliamed in claim 1, 2 or 3, characterised in that apertures (8,9) are formed at each end of the elongate slot (7) in order to reduce stress concentrations.

5. A torsion bar assembly as claimed in any one of claims 1 to 4, characterised in that a support member (1) is secured to each end of the torsion element (2).

| | **DOCUMENTS CONSIDERED TO BE RELEVANT** | | | EP 89313664.8 |
|---|---|---|---|---|
| Category | Citation of document with indication, where appropriate, of relevant passages | | Relevant to claim | CLASSIFICATION OF THE APPLICATION (Int Cl⁴) |
| A | DE - A - 631 146 (HASSELKUSS)  * Fig. 1,2,3 *  -- | | | B 60 G 11/20  F 16 F  1/16 |
| A | DE - A - 868 537 (HEDTMANN)  * Totality *  ---- | | | |

TECHNICAL FIELDS
SEARCHED (Int Cl⁴)

B 60 G
F 16 F

The present search report has been drawn up for all claims

| Place of search | Date of completion of the search | Examiner |
|---|---|---|
| VIENNA | 09-03-1990 | PANGRATZ |